# EUROPEAN PATENT APPLICATION

(11) **EP 4 446 944 A1**
(43) Date of publication of application: **16.10.2024**
(21) Application number: 23168109.9
(22) Date of filing: 14.04.2023
(51) Int. Cl.: G06N 3/0464, G06N 3/09, G06N 3/0985, G06N 3/091

(54) **EFFICIENT ACTIVE LEARNING**

(71) Applicant: aiMotive Kft., 1025 Budapest (HU)
(72) Inventor: Matuszka, Tamás, 1063 Budapest (HU); Németh, Gábor, 1111 Budapest (HU)
(74) Representative: Hofmann, Matthias

(57) **Abstract**

The present invention provides a method for assisted training of a machine learning model for computer-assisted vehicle control, the method comprising, in an iterative manner:
- sampling one or more candidate datapoints from a set of unlabelled datapoints,
- computing an acquisition function of the candidate datapoints,
- if for a first datapoint in the set of unlabelled datapoints a first condition relating to a first value of the acquisition function for the first datapoint is fulfilled, removing the first datapoint from the set of unlabelled datapoints,
- if for a second datapoint in the set of candidate datapoints a second condition relating to a second value of the acquisition function for the second datapoint is fulfilled, obtaining a label for the second datapoint and adding the second datapoint with the label to a set of labelled datapoints, and
- training the machine learning model using the set of labelled datapoints.

## Description

### TECHNICAL FIELD

The present invention relates to a method for assisted training of a machine learning model for computer-assisted vehicle control and a machine learning device.

The present invention also relates to a computer-readable storage medium storing program code, the program code comprising instructions for carrying out such a method.

### BACKGROUND

Deep convolutional neural networks (CNNs) have surpassed the capabilities of classical image processing algorithms. However, such models require enormous amounts of training samples. In the current literature there are a few approaches that try to deal with this problem. One of these approaches is based on the hypothesis that only a small percentage of training samples have substantial information for our machine learning model. Since acquiring new unlabelled images is much cheaper than manual annotation, it is obvious that choosing the inputs that, if labelled, would be the most informative for the neural network can reduce the number of required samples. This process is called active learning (AL).

One of the key problems of using AL for deep learning applications is that training deep neural networks is computationally expensive and due to the complexity of the learnt mapping the classical active learning approaches are bound to fail.

### SUMMARY OF THE INVENTION

The objective of the present invention is to provide a method for assisted training of a machine learning model for computer-assisted vehicle control and machine learning device, configured to carry out the method of assisted training of a machine learning model for computer-assisted vehicle control, which overcome one or more of the above-mentioned problems of the prior art.

A first aspect of the invention provides a method for assisted training of a machine learning model for computer-assisted vehicle control, the method comprising, in an iterative manner:
- sampling one or more candidate datapoints from a set of unlabelled datapoints,
- computing an acquisition function of the candidate datapoints,
- if for a first datapoint in the set of unlabelled datapoints a first condition relating to a first value of the acquisition function for the first datapoint is fulfilled, removing the first datapoint from the set of unlabelled datapoints,
- if for a second datapoint in the set of candidate datapoints a second condition relating to a second value of the acquisition function for the second datapoint is fulfilled, obtaining a label for the second datapoint and adding the second datapoint with the label to a set of labelled datapoints, and
- training the machine learning model using the set of labelled datapoints

The method of the first aspect has the advantage that by detecting one or more first datapoints, which fulfill a first condition (which indicates low importance for the training), and removing these datapoints, the set of unlabelled datapoints is reduced and thus a computational complexity of the training is reduced. In particular, the method can be implemented such that these removed datapoints are completely removed, i.e., no memory space and/or computation time for processing these datapoints is required. In other embodiments, the removed datapoints are still stored in some memory, i.e., they are not completely deleted, but they are disregarded, which reduces a computation time.

Preferably, the first condition is defined such that it is fulfilled if a first datapoint is unlikely to be relevant for the training of the machine learning model and/or the second condition is defined such that the second condition is fulfilled if the second datapoint is important for training of the machine learning model.

The method of the first aspect is advantageous in particular for working with large datasets, where the amount of data available is larger than what can sensibly be processed by a machine learning model. For example, the datapoints may comprise images, videos, radar, lidar and/or additional sensor data. In particular, these sensor data may have been acquired from a moving vehicle or an entire fleet of moving vehicles. It is understood that a fleet of moving vehicles may acquire many TB or even PB of input data in a short time. In such scenarios, it is particularly beneficial that the method of the first aspect can, in an iterative manner, remove datapoints that do not need to be labelled for the training, thus reducing the amount of input data that needs to be stored and labelled to a more manageable size.

The annotation in the method of the first aspect may be performed by a human user. In that way, the method may be user-assisted. However, the assistance can also be by a machine, e.g. some automated annotation mechanism that is still "expensive", i.e., it may still be preferable that the machine-annotation does not need to be performed for each datapoint in the dataset. In a further embodiment, the annotation can be performed by both a human annotator and a machine, i.e., a combination of the two approaches can be used.

The method of the first aspect can be performed on a dataset of unlabelled datapoints that is completely available at the beginning, or it can be performed by iteratively adding datapoints to the input data. In particular, new datapoints can be added as soon as the new unlabeled datapoints are produced, e.g. as soon as they are acquired by one or more data acquisition devices, e.g. a fleet of vehicles that are equipped with sensors and which uses the sensors to acquire training data.

It is understood that the initial sampling step may be omitted in cases where no input data are available yet or only small number of datapoints, where no sampling is required.

In a first implementation of the method according to the first aspect, the first condition is fulfilled if the first value of the acquisition function for the first datapoint is ranked among a first predetermined number of lowest acquisition values.

In this implementation, the first condition (which leads to the first datapoint being removed from the set of unlabelled datapoints) is fulfilled if it is determined that the acquisition function (which can be seen as an indication of the importance for a certain datapoint to be sampled) has such a low value that it is clear that is not of relevance for the learning. Even if in future iterations, the value of the acquisition function for this first datapoint was higher, it would still be very unlikely to ever reach such a high value that it would be selected for the (expensive) annotation. Therefore, the first condition is fulfilled and the datapoint is removed from the set of unlabelled datapoints (thus will never appear for annotation).

The first predetermined number can be predetermined based on a preference of how many datapoints should be removed during the iterations. A high value of the first predetermined number leads to many data points being removed from the dataset. This has the effect of a large reduction of the size of the dataset which may reduce a computational burden but may lead to training results of lower quality. On the other hand, a low value of the predetermined first number leads to few datapoints being removed from the dataset. Therefore, the size of the dataset may be large, and a computational burden may be high. In practice, the first predetermined number may be chosen as a suitable compromise.

In a further implementation of the method according to the first aspect, the first condition is fulfilled if the first value of the acquisition function is lower than a predetermined first threshold value.

In a further implementation of the method according to the first aspect, the second condition is fulfilled if the second value of the acquisition function for the second datapoint is among the second predetermined number of highest acquisition values.

In a further implementation, the second condition is fulfilled if the second value of the acquisition function for the second datapoint is higher than a predetermined second threshold value.

In a further implementation of the method according to the first aspect, the sampling is performed such that in an iteration a predetermined share of datapoints from the set of unlabelled datapoints is sampled as candidate datapoints, wherein preferably the predetermined share is between 3% and 30%, in particular between 5% and 20%.

In a further implementation of the method according to the first aspect, the sampling is performed such that the higher a confidence value of the acquisition function for a given datapoint from the set of unlabelled datapoints, the more likely the given datapoint is to get sampled as candidate datapoint. In this way, the sampling does not completely ignore datapoint with a lower confidence value but puts higher emphasis on those with a high confidence value.

In a further implementation of the method according to the first aspect, sampling comprises a step of determining a sampling probability based on a sampling temperature, wherein preferably the sampling temperature is optimized in a hyperparameter optimization process. It is understood that both a high sampling temperature and a low sampling temperature can have specific advantages. The hyperparameter optimization process has turned out ideal for determining an optimum value in a given application scenario.

In a further implementation of the method according to the first aspect, the machine learning model comprises a neural network, in particular a convolutional neural network.

In a further implementation of the method according to the first aspect, the machine learning model is trained to enhance operation of a vehicle. For the operation of vehicles, often a large amount of training data is available. Vehicle sensors typically include one or more cameras or one or more sets of cameras, which can acquire a large amount of data in a short time. For example, a video stream from a single camera may involve more than 1 GB per recorded hour of video. Therefore, the method of the first aspect, which can lead to a reduction of the size of a training data set, can be employed to efficiently reduce the amount of training data and/or to reduce the number of (e.g., manual) annotations involved in labelling the training data.

In a further implementation of the method according to the first aspect, the vehicle is a fully or partially autonomous vehicle. For autonomous vehicles, it is particularly important these are trained in many different scenarios. Therefore, the method of the first aspect is particularly important in helping to focus the (expensive and/or timely) annotation (e.g., manual annotation) on those datapoints that are important for the training of the machine learning model.

In a further implementation of the method according to the first aspect, the machine learning model is trained to detect objects in 3D data and/or to predict a trajectory in 3D data, wherein preferably the 3D data comprise point clouds. Furthermore, the training can be with the goal to perform 2D detection, segmentation, object detection in 2D or 3D, and/or generally any type of sensing for automotive purposes.

In a further implementation of the method according to the first aspect, datapoints comprise sensor data, in particular sensor data from a camera or a set of cameras, a RADAR and/or a LIDAR or any type of sensor data used for training purpose.

In a further implementation of the method according to the first aspect, the obtaining a label for the second datapoint comprises outputting a datapoint acquisition instruction to a user and obtaining the label from the user. In this way, the method of the first aspect can be used to directly instruct a user to label the most important datapoints.

A second aspect of the invention refers to a machine learning device which is configured to carry out the method of the first aspect or one of the implementations of the first aspect. The machine learning device may be implemented on a desktop computer or a server, e.g. in a data center.

A further aspect of the invention refers to a computer-readable storage medium storing program code, the program code comprising instructions that when executed by a processor carry out the method of the first aspect or one of the implementations of the first aspect.

### BRIEF DESCRIPTION OF THE DRAWINGS

To illustrate the technical features of embodiments of the present invention more clearly, the accompanying drawings provided for describing the embodiments are introduced briefly in the following. The accompanying drawings in the following description are merely some embodiments of the present invention, modifications on these embodiments are possible without departing from the scope of the present invention as defined in the claims.
- FIG. 1: is a flow chart illustrating a conventional method for active learning,
- FIG. 2: is a flow chart illustrating a method in accordance with a first embodiment of the present invention,
- FIG. 3: is a flow chart illustrating a step of the method of FIG. 2 in more detail,
- FIG. 4: is a flow chart illustrating a method in accordance with a second embodiment of the present invention, and
- FIG. 5: is an illustration of results achieved with an embodiment of the present invention.

### DETAILED DESCRIPTION OF EMBODIMENTS

The descriptions herein are only implementation manners of the present invention, the scope of the present invention is not limited to this. Any variations or replacements can be easily made through person skilled in the art. Therefore, the protection scope of the present invention should be subject to the protection scope of the attached claims.

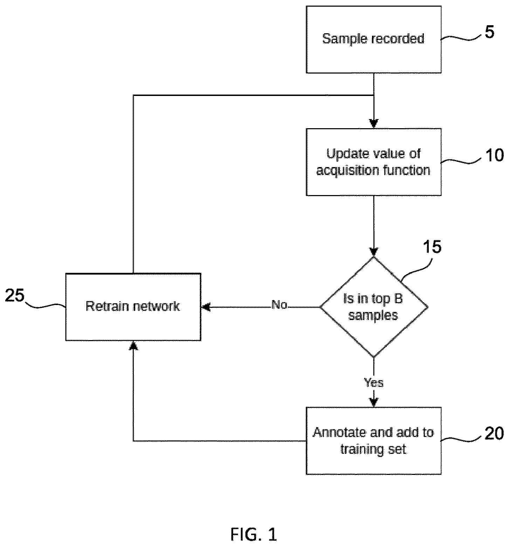

FIG. 1 shows a flow chart of a conventional method of active learning. The method starts with a step 5 of receiving a recorded sample. In subsequent step 10, the value of the acquisition function is updated and computer for the newly received sample. In step 15, a check is performed whether the value of the acquisition function for the new sample is in the top B samples. In other words, in this step a ranking of the values of the acquisition function of the samples in a dataset is performed. If the new sample is among the top B samples, it is annotated and added to the training set (which comprises the annotated data) in step 20.

The network is retrained in step 25. The retrained network may give different results and will also lead to a different acquisition function. Therefore, the method iteratively continues with step 10, where the value of the acquisition function for (unlabelled) samples is updated and again the top B samples are determined. This method of active learning can give very good results. In particular, it is possible to iteratively ask a user to label those datapoints that are most important to be labelled. However, there may be problems if the original dataset is too large and it is computationally too demanding to update the acquisition function values and determine the top B samples in each iteration.

Training deep neural networks requires large amounts of precisely annotated training data. In the labelling process, choosing the most informative training samples can reduce labelling costs. This process is called active learning. However, this process might be computationally expensive. Embodiments of the present invention provide a solution that enables to do active learning using less computation and less disk space while maintaining, or in some cases outperforming accuracy on state-of-the-art active learning strategies. The proposed method can be utilized for example for increasing autonomous driving related auto-annotation throughput, reducing annotation costs, reducing space usage (not relevant recordings can be deleted).

Classical approaches to active learning usually choose one sample to label at a time. However, training deep neural networks with one more sample might have no significant change in the accuracy of the model, while it needs much more computation. The solution to this problem is batch mode AL, instead of choosing only one sample at a time, a batch of samples are chosen to annotate and retrain the network with the union of the already labelled samples and the newly labelled ones. Because of the fact that more than one sample can be chosen at a time, it is easy to see that the chosen samples might be redundant in some sense, and thus leading to a suboptimal solution. Various deep active learning strategies have been developed in the last few years that try to deal with this problem. Deep active learning strategies can be divided into three groups: acquisition function based, diversity based, and hybrid strategies.

Acquisition function-based methods assign a scalar for each of the unlabeled samples and enable us to sort the samples given the values. These methods usually rely on Bayesian inference, which is not trivial for such models. There are several approaches to this problem, for example Bayes-By- Backprop, ensemble learning, Monte Carlo dropout, etc. When using MC dropout for classification, one could use the mean of the output distribution as a true distribution and calculate the entropy of it, giving us a value to order our samples by. For regression, the deviation of the output distribution can be measured and that value be used to order. These methods can be extended to dense prediction tasks, including semantic segmentation or object detection too. However, there is a mode collapse of acquisition function-based active learning, which is that these methods tend to create a dataset with a not uniformly distributed label space. Also, choosing redundant data points can be a problem of these approaches, which hurts performance as the batch size of newly labeled data points is increased.

Diversity-based methods try to find inputs that represent the diversity in the unlabeled pool. The most popular method is called Core-Set, which tries to find a batch of samples such that when added to the training set, the distance between an image in the unlabeled pool and its closest image in the training set is minimal. This problem is NP-hard, therefore it is necessary to use an approximation when choosing the desired batch.

Hybrid methods usually evaluate an acquisition function on the unlabeled data points, and after sorting, the top N data points are fed into a diversity sampling method, for example K-means or weighted K-means. N is usually 10 times the batch size of K, the number of points to label.

As one use the invention proposes more sophisticated algorithms. This leads to an increase in computational needs, thus leading to slower active learning cycles. For example, evaluating MC dropout usually means to run a forward pass of a given sample over 50 times (with different dropout configurations) to get a good estimate. For many unlabeled samples, this process alone might take a large amount of time. In case of substantial amounts of unlabeled data being recorded every day, it can be very useful to prefilter these recordings. This is beneficial not only because these samples might not be used for manual labelling and training afterwards, but also because they might even need to go through various transformations and processes that take time and computation. Even after the transformations, the unlabeled training samples can be deleted using sophisticated algorithms based on active learning.

Preferred embodiments are based on the hypothesis that once the network is confident about different inputs. It is very unlikely that this fact is going to change over the active learning cycle.

One important concept of embodiments is the following. Given a labeled, and an unlabeled pool of data points, firstly a training is run on a neural network and then the acquisition function on all unlabeled samples is evaluated. Then the best B number of data points to label is chosen, added to the labeled pool and the network is retrained. Deep active learning is done by iterating through these steps repeatedly. According to the invention, after the first training, evaluation, labelling and retraining steps, the output of the acquisition function for each unlabeled data point is saved and the dataset is to be subsampled based on these values into a so-called candidate pool. Sampling is made in a way that the more confident the network is on a given sample, the less likely it is to be in the candidate pool. After the second training, the acquisition function shall be only evaluated on the samples which are in the candidate pool and updating is done only for the values of the acquisition function for these samples.

Afterwards, the partially updated values of the acquisition function are used to resample the candidate pool. Since the size of the candidate pool is chosen suitably, this means that the time used for evaluating the acquisition function can be controlled in every step in a non-naive way. The sampling effect not only saves time, but also compensates for the cases where suboptimal points could be chosen due to sampling. Due to sampling, the probability of highly redundant batches or unbalanced label space is much lower.

The proposed algorithm was evaluated on two widely used AL benchmark datasets, MNIST and CIFAR10. A random but balanced set of samples was used to start with, and the size of the labelled dataset was gradually increased. The same starting samples, network architecture, training parameters and acquisition function for evaluating our method were used. The only difference between the experiments was the size of the candidate pool, which varied from 2-100% of the original size of the unlabelled pool, where 100% is the conventional way of using active learning. Our results showed that using our proposed algorithm can not only result in faster iterations, but also faster convergence in accuracy (in function of the number of labelled samples). It was also shown in the experiments that the algorithm can be used with various acquisition functions.

The input data provided to the method may include autonomous vehicle sensor data. The task that the method is being trained for may include 3D object detection. Or it may a collection of tasks, including e.g. point cloud segmentation, BEV segmentation, future trajectory estimation, etc.

Preferred embodiments may involve a number of tunable parameters, where optimum parameter values may be determined e.g. using hyperparameter optimization.

In particular, two tunable parameters are the size of the candidate set or in other words the number of sampled candidate datapoints and the function that generates a probability distribution from acquisition function (AF) values.

### Number of sampled candidate datapoints

Number of sample candidate datapoints can be seen as an interpolation factor between conventional AL (active learning) and the proposed efficient AL solution. If the sample candidate datapoints include the entire unlabelled dataset, then the algorithm is the same as in conventional AL. The more the number of sampled candidate datapoints is decreased, the fewer samples with calculated acquisition function are evaluated. However, if the number of sampled candidate datapoints is extremely small, then the algorithm will obviously fail to converge, since the value of the acquisition function is basically not updated for most of the unlabelled dataset. Therefore, the number of sampled candidate datapoints is the function of available computational resource. If a sufficient amount of computational power is available, it might be suitable to choose the number of sampled candidate datapoints to be 15-30% of the size of the unlabelled pool, if only a more restricted computational capacity is available, one may opt for 5-10%. The number of sampled candidate datapoints being more than 50% will not result in better performance, and it will require more computation too. The problem with choosing this value is that (according to experimental results) sparser sampling might be beneficial in terms of performance. Determining this value is therefore based on empirical experimentation and available computational resources.

### Function for creating distribution out of AL values

Creating a categorical distribution from non-normalized scalars is a frequently used method in ML, which is applied in the proposed algorithm for the sampling of unlabelled data. One of the most common ways is done by using the SoftMax function. However, in case of different ranges in the value of different AFs, one must employ the SoftMax temperature T to tune the output distribution. In extreme cases this will either result in choosing the top C samples (T=∞) or uniformly sampling the unlabelled dataset (T=0). In the case of entropy as an acquisition function w an observation is made that the basic T=1 is a fine choice (so it does not require much of tuning), but one could use different values of T or different normalization function (e.g.: simply dividing by the sum of AF values). Determining this function is based on empirical experimentation only.

Other parts of the algorithm are based on conventional AL methods. For example, one has the option to do Bayesian inference using Monte Carlo/Ensemble/Bayesian CNNs. This might also be a design choice, but it is not in the scope of the novelty of the algorithm. However, since an efficient method is designed it is beneficial to use MC dropout, since it is the most computation efficient version of Bayesian inference.

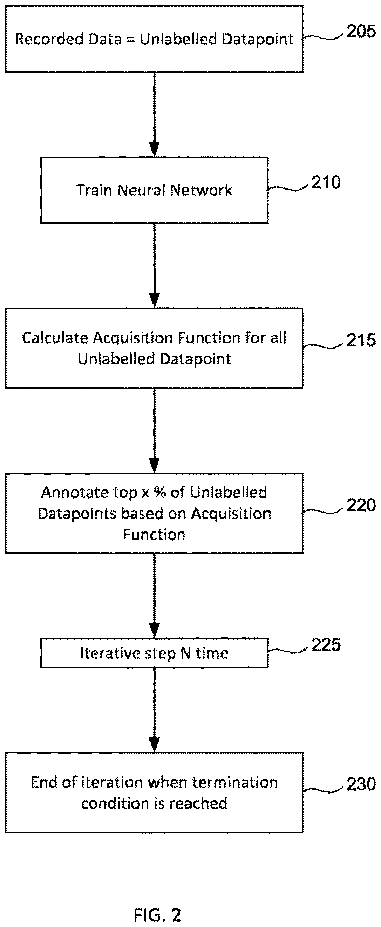

FIG. 2 is a further overview flowchart of a method in accordance with the present invention.

The method comprises an initial step 205 of receiving the recorded data as unlabelled data.

In a step 210, a neural network is trained. This training may be based on labelled data and the unlabelled data received in the previous step.

Subsequently, in step 215, the AF is calculated for all unlabelled datapoints. Then, in step 220, the top x % of unlabelled datapoints are annotated based on the values of the acquisition function for the unlabelled datapoints.

In step 225, an iteration is performed N times, until in step 230 a termination condition is reached.

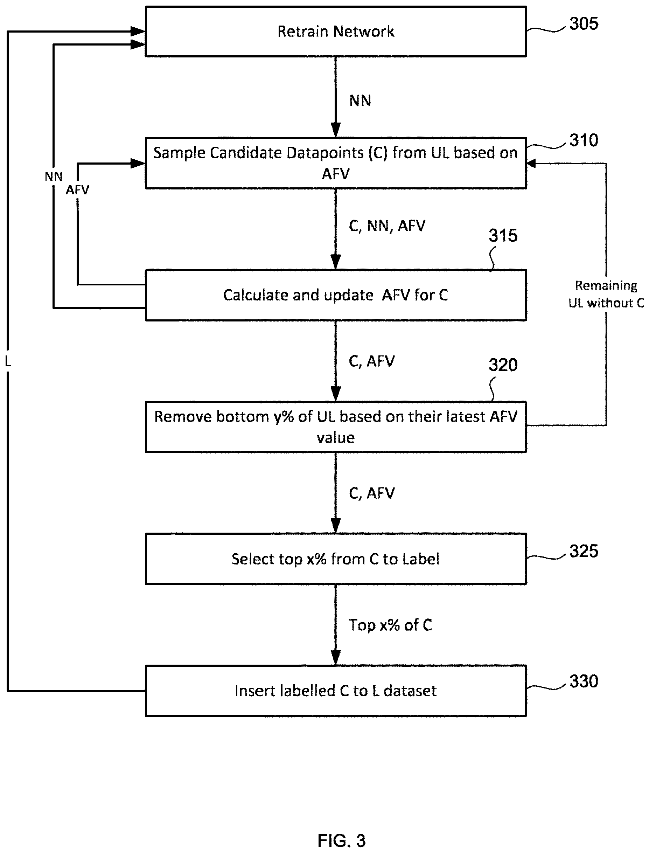

FIG. 3 illustrates the iterative step of the method of FIG. 2 in more detail.

In a first step 305, then network is retrained. This comprises: Perform the training of a neural network using labelled samples. (This step might use unlabelled datapoints, for example when using semi-supervised learning methods, but this is not relevant at all in case of active learning.)

In step 310, Sample Candidate Datapoints (C) are the set of candidate datapoints sampled from the unlabelled datapoints (UL) based on the acquisition function value (AFV). In this step one shall normalize the acquisition function values (AFV) to represent a probability distribution, then a sampling of a subset is performed (this is what is the so-called candidate set) of it. The desired size of the candidate set or in other words the number of the sampled candidate datapoints has been described earlier herein.

In step 315, the AFV is calculated and updated for C. One has to evaluate the acquisition function (which may be any arbitrary function) and update their corresponding sample's value.

In step 320, the bottom y% of UL are deleted based on their latest AFV value. Preferably, this involves simply removing the selected datapoints from the volume. The value of y could be chosen based on various motivations. One of this is the number of unlabelled samples recorded each week. There is a finite amount of capacity to label (and to train networks on), and obviously this means that if the dataset increases by 1% each week, one might as well delete 0.5% of the whole dataset. The number of stored samples still converges to infinity, but at a much lower rate.

Another reason to increase y might be that the desired performance of the network is getting closer to the defined goal. The better performance is acquired at a given task, the lower the possibility that a new sample is going to be useful, thus one can delete more of the unlabelled samples. However, the most impactful reason may be one's capacity to label samples. If one can afford to label only a super small percentage of incoming samples, then obviously a higher number of unlabelled samples can be deleted.

One could also define a constant which measures how many unlabelled samples one would want to keep (e.g.: 100 000 unlabelled samples). Then the number of samples that are dropped could be automatically calculated using the incoming new unlabelled samples as well as a number of labelled samples.

In step 325, the top x% from C are selected to be labelled. The percentage can be based on how often the network should be trained, which is a function of computational power, (and possibly also of the financial budget available for labelling, along with how long it lasts to label the samples, which is again based on the budget for labelling).

In step 330, the labelled C are inserted to the labelled dataset L. This labels the selected samples and adds them to the labelled dataset.

The acquisition function value is not updated for the samples that are not chosen into the candidate set in the given active learning iteration. This means that in the next active learning iteration their values are not updated, but the sampling is based on these values.

The acquisition function can be any arbitrary function that might (it is not always necessary) use the trained (Bayesian) neural network and the sample as input.

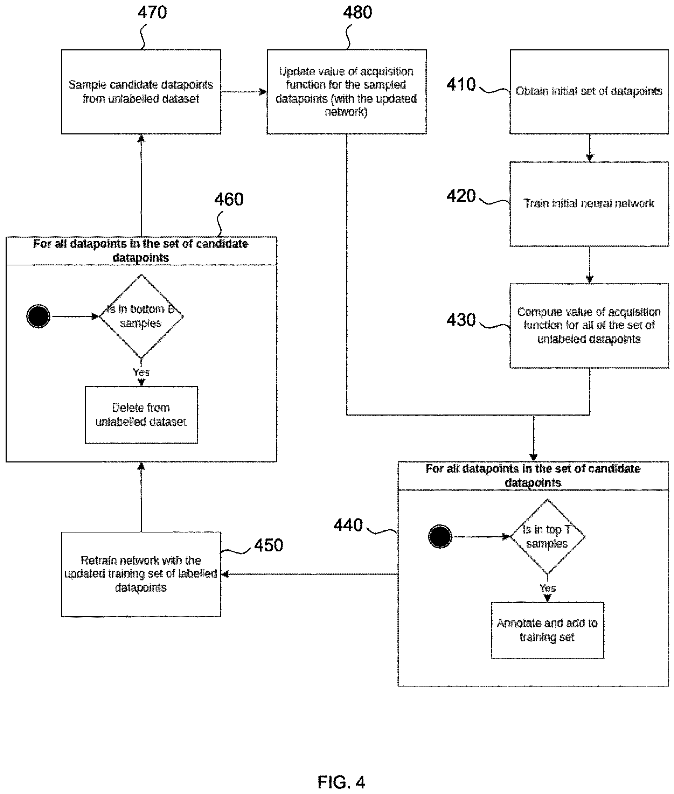

FIG. 4 is a further flow chart of another method in accordance with an embodiment of the present invention.

The method comprises an initial step 410 of obtaining an initial set of datapoints. These are used to perform an initial training of a neural network in step 420. The trained neural network is used to compute values of the acquisition function for all of the set of unlabelled datapoints in step 430. The datapoints from the initial set of datapoints may be added to a set of candidate datapoints.

This is followed by step 440, which is performed for all datapoints in the set of candidate datapoints: If a datapoint from the set of candidate datapoints is in the top T samples (in terms of value of the acquisition function), the datapoint is annotated with a label (e.g., by a user) and the combination of datapoint and corresponding label is added to a training set.

The method continues in step 450 with retraining the network with the updated training set of labelled datapoints.

Subsequently, in step 460, for all datapoints in the set of candidate datapoints, the bottom T datapoints (herein also referred to as samples) are determined and deleted from the unlabelled dataset.

In step 470, sampling of candidate datapoints from the unlabelled dataset is performed to obtain the set of candidate datapoints or in other words candidate set.

On this candidate set then the value of the acquisition function is updated (using the retrained network) in step 480 and the method continues in an iterative manner in step 440.

Several experiments have been conducted using MNIST and CIFAR datasets. The method has been validated on real recordings from the applicant's fleet.

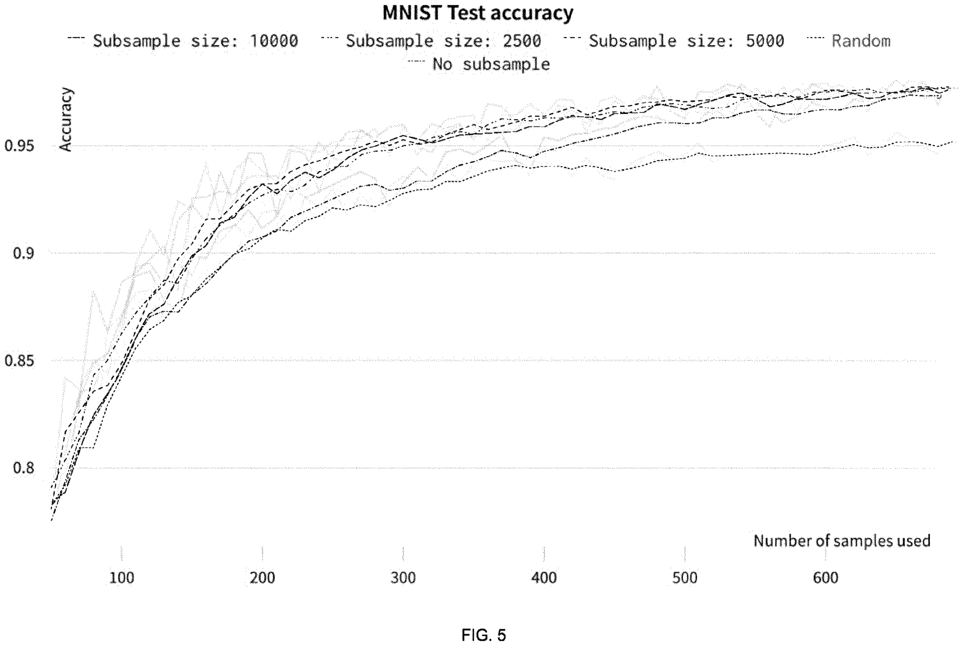

FIG. 5 is a diagram of the conducted experiments using the proposed method with various subsample sizes, and random sampling as an AL strategy for baseline. One may observe that with subsampling using an embodiment of the present invention the accuracy converges faster than without subsampling or choosing random samples to label as the number of labelled samples increases.

## Claims

1. A method for assisted training of a machine learning model for computer-assisted vehicle control, the method comprising, in an iterative manner:
- sampling one or more candidate datapoints from a set of unlabelled datapoints,
- computing (110, 150) an acquisition function of the candidate datapoints,
- if for a first datapoint in the set of unlabelled datapoints a first condition (115) relating to a first value of the acquisition function for the first datapoint is fulfilled, removing (120) the first datapoint from the set of unlabelled datapoints,
- if for a second datapoint in the set of candidate datapoints a second condition (125) relating to a second value of the acquisition function for the second datapoint is fulfilled, obtaining (130) a label for the second datapoint and adding the second datapoint with the label to a set of labelled datapoints, and
- training (140) the machine learning model using the set of labelled datapoints.

2. The method of claim 1, wherein the first condition (115) is fulfilled if the first value of the acquisition function for the first datapoint is ranked among a first predetermined number of lowest acquisition values.

3. The method of claim 1 or 2, wherein the second condition (125) is fulfilled if the second value of the acquisition function for the second datapoint is among a second predetermined number of highest acquisition values.

4. The method of claim any of the previous claims, wherein the sampling is performed such that in an iteration a predetermined share of datapoints from the set of unlabelled datapoints is sampled as candidate datapoints, wherein preferably the predetermined share is between 3% and 30%, in particular between 5% and 20%.

5. The method of any of the previous claims, wherein the sampling is performed such that the higher a confidence value of the acquisition function for a given datapoint from the set of unlabelled datapoints, the more likely the given datapoint is to get sampled as candidate datapoint.

6. The method of claim 5, wherein sampling comprises a step of determining a sampling probability based on a sampling temperature, wherein preferably the sampling temperature is optimized in a hyperparameter optimization process.

7. The method of one of the previous claims, wherein the machine learning model comprises a neural network, in particular a convolutional neural network.

8. The method of claim 7, wherein the vehicle is a fully or partially autonomous vehicle.

9. The method of one of the previous claims, wherein the machine learning model is trained to detect objects in 3D data and/or to predict a trajectory in 3D data, wherein preferably the 3D data comprise point clouds.

10. The method of one of the previous claims, wherein datapoints comprise sensor data, in particular sensor data from a stereo camera, a RADAR and/or a LIDAR.

11. The method of one of the previous claims, wherein the obtaining a label for the second datapoint comprises outputting a datapoint acquisition instruction to a user and obtaining the label from the user.

12. The method of one of claims 1 to 10, wherein the obtaining a label for the second datapoint comprises outputting a datapoint acquisition instruction to a separate automated or semi-automated labelling system and obtaining the label from that separate loop.

13. Machine learning device, configured to carry out the method of one of the previous claims.

14. A computer-readable storage medium storing program code, the program code comprising instructions that when executed by a processor carry out the method of one of claims 1 to 12.
